# FASCICULE DE BREVET EUROPEEN

(11) **EP 2 911 917 B1**
(45) Date de publication et mention de la délivrance du brevet: **06.06.2018**
(21) Numéro de dépôt: 13779815.3
(22) Date de dépôt: 18.10.2013
(51) Int. Cl.: B60R 22/185, B60N 2/28, B60R 22/10

(54) **DISPOSITIF DE BLOCAGE D'UNE SANGLE DANS UN SIEGE AUTO POUR ENFANT ET SIEGE AUTO POUR ENFANT COMPRENANT UN TEL DISPOSITIF DE BLOCAGE**
VORRICHTUNG ZUM VERRIEGELN EINES GURTS IN EINEM KINDERSITZ UND KINDERSITZ MIT EINER DERARTIGEN VERRIEGELUNGSVORRICHTUNG
DEVICE FOR LOCKING A STRAP IN A CHILD CAR SEAT AND CHILD CAR SEAT COMPRISING SUCH A LOCKING DEVICE

(30) Priorité: 26.10.2012 FR 1260273
(43) Date de publication de la demande: 02.09.2015
(73) Titulaire: Dorel France, 49309 Cholet Cedex (FR)
(72) Inventeur: GODARD, Christian, F-85110 Sainte-Cecile (FR)
(74) Mandataire: Vidon Brevets & Stratégie
(86) Numéro de dépôt international: PCT/EP2013/071871
(87) Numéro de publication internationale: WO 2014/064012

(56) Documents cités:
- EP-A1- 1 145 899
- EP-A1- 2 263 910
- EP-A2- 0 186 105
- DE-A1- 3 624 569
- DE-A1- 4 123 428
- DE-U1- 29 909 114
- US-A- 4 688 849

## Description

### 1. Le domaine de l'invention

Le domaine de l'invention est celui de la puériculture. Plus précisément, l'invention concerne les sièges auto pour enfant qui sont destinés à être installés sur les sièges passager d'un véhicule, notamment automobile. L'i"vention concerne en particulier la sécurisation de ces sièges auto pour enfant, et notamment le maintien efficace et sûr de ceux-ci en cas de choc ou mouvement brusque ou collision, de façon à garantir la sécurité et le confort de l'enfant transporté.

### 2. Solutions de l'art antérieur

Dans les sièges auto actuels destinés aux enfants, une ou plusieurs sangles de longueur variable sont employées, en particulier les sangles du harnais, la sangle anti-basculement encore appelée « top tether », et dans certains cas particuliers de sièges auto pivotants, une sangle de liaison de longueur variable s'étendant entre une partie mobile et une partie fixe du siège auto.

Il est nécessaire que ces sangles soient bloquées lors d'un choc, d'une collision ou d'un freinage brusque afin de retenir efficacement l'enfant et/ou une partie mobile du siège auto.

Diverses solutions ont été proposées, selon les applications. Ainsi, on connaît du brevet EP-0 173 726 une ceinture de sécurité apte à être bloquée, notamment lors d'un choc brutal, par un élément de renvoi pivotant et entraîné instantanément en rotation par l'utilisateur lors du choc jusqu'à une position de blocage de la ceinture de sécurité.

On connaît, par ailleurs, du brevet EP-1 625 983, une ceinture de sécurité coulissant entre une came et une surface d'appui. Lors d'un choc, le mouvement de l'utilisateur sur la ceinture entraîne la came contre la surface d'appui, en venant bloquer ainsi la ceinture de sécurité.

On connaît encore, du brevet US-7 628 349, un dispositif de blocage d'une ceinture de sécurité mettant en oeuvre deux roues dentées qui, lorsqu'elles ne peuvent plus pivoter, bloquent le déroulement de la ceinture. Un mécanisme permet, en cas de choc, le blocage des roues dentées et donc de la ceinture.

Le document DE 36 24 569 A1 décrit un dispositif de blocage d'une sangle dans un siège auto pour enfant correspondant au préambule de la revendication 1. Le titulaire de la présente demande de brevet a également développé un siège auto pivotant mettant en oeuvre une sangle de liaison dans un siège auto pour enfant, objet de la demande de brevet FR1153667 (non publiée), destiné à équiper un siège de véhicule, comprenant :
- un fauteuil comportant une assise et un dossier, et
- une embase par rapport à laquelle le fauteuil est mobile en rotation entre au moins une position de transport et au moins une position d'installation d'un enfant.

Le siège auto est solidarisé au véhicule par des pinces de fixation ou par une ceinture de sécurité d'une part et une sangle anti-basculement reliant ladite embase à un point d'ancrage du véhicule d'autre part.

Dans ce type de siège auto, des moyens de liaison de longueur variable, formant en particulier la sangle de liaison, sont prévus et comprennent une extrémité solidaire, ou fixée, à l'embase et une autre extrémité solidaire, ou fixée, à une partie supérieure du dossier. Cette sangle de liaison de longueur variable relie ainsi l'embase à la partie supérieure du dossier.

Dans ce siège auto, la sangle anti-basculement reliée à l'embase conserve une longueur fixe et tendue quelle que soit la position du fauteuil. Par ailleurs, la sangle de liaison permet de déplacer, en rotation notamment, le fauteuil par rapport à l'embase.

De cette façon, il est en particulier possible de réaliser des sièges auto sûrs, permettant une installation du fauteuil face à la route ou dos à la route. La sangle anti-basculement reste montée de la même façon, sans qu'il soit nécessaire de la déplacer ou de la rallonger. La variation de distance due à la position du dossier dans l'une ou l'autre des positions est absorbée par la sangle de liaison de longueur variable.

Cette approche permet également de faire varier la longueur de la sangle de liaison pour passer dans une position d'installation.

Ce siège auto comprend donc des moyens de contrôle de la sangle de liaison autorisant ou interdisant une variation de leur longueur.

Ces dispositifs sont souvent complexes et généralement onéreux dans leur mise en oeuvre. Ils peuvent en outre être insuffisamment efficaces et/ou précis, et en conséquence ne pas garantir un niveau de sécurité suffisant.

### 3. Objectifs de l'invention

L'invention a notamment pour objectif de pallier tout ou partie des inconvénients de l'art antérieur.

Plus précisément, l'invention a pour objectif de fournir un dispositif de blocage d'une sangle dans un siège auto pour enfant plus sécurisé et plus performant sur le plan dynamique.

L'invention a encore pour objectif de fournir un siège auto comportant un tel dispositif de blocage qui soit relativement simple et bon marché, tout en restant parfaitement fiable.

L'invention a encore pour objectif de fournir un siège auto comportant un tel dispositif de blocage, qui permette un passage du siège auto d'une position de transport à une position d'installation et vice-versa.

### 4. Exposé de l'invention

L'invention répond à tout ou partie de ces objectifs grâce à un dispositif de blocage d'une sangle dans un siège auto pour enfant selon la revendication 1.

Grâce à l'invention, la sangle est libre de circuler sauf en cas de choc, notamment de freinage brusque ou de collision, c'est-à-dire lorsqu'une force d'inertie produisant une accélération de l'organe de commande supérieure à un seuil prédéterminé est appliquée à l'organe de commande, lequel bloque alors automatiquement la sangle. Ce blocage de sangle permet de retenir l'enfant dans le siège auto, et/ou le siège auto lui-même et/ou permet d'empêcher un pivotement non volontaire du siège auto en cas de choc, selon l'emplacement du dispositif de blocage.

Le seuil prédéterminé de l'accélération de l'organe de commande produite par la force d'inertie dans l'organe de commande, nécessaire pour faire passer l'organe de commande de la position de libre circulation de la sangle à la position de blocage, peut être par exemple supérieur ou égal à 0,25*g, (soit de l'ordre de 2,5 m.s⁻², g étant une unité d'accélération correspondant approximativement à l'accélération de la pesanteur à la surface de la Terre, de préférence supérieur ou égal à 0,8*g, soit environ 7,8 m.s⁻².

La masselotte peut présenter une masse supérieure ou égale à 5g, de préférence supérieure ou égale à 30g.

Le dispositif de blocage peut comprendre un organe de rappel dudit au moins un premier élément de blocage ou verrou dans une position permettant une libre circulation de la sangle. L'organe de rappel peut par exemple consister en un ressort, notamment solidaire du premier élément de blocage ou verrou.

En l'absence de choc ou de freinage brusque, le ou les premiers éléments de blocage ou verrou(s) peuvent alors être en position de libre circulation de la sangle et la sangle peut circuler librement.

L'invention a encore pour objet, en combinaison avec ce qui précède, un siège auto pour enfant, destiné à équiper un siège de véhicule, comprenant au moins une sangle de longueur variable. Ce siège auto comprend au moins un dispositif de blocage tel que défini plus haut, agissant sur la sangle.

La sangle peut comporter une extrémité solidaire d'un enrouleur. Ainsi, en position de libre circulation de la sangle, le dispositif de blocage permet le déroulement de la sangle hors de l'enrouleur ou l'enroulement de la sangle dans l'enrouleur. Lors d'un choc soumettant l'organe de commande inertiel à une force d'inertie produisant une accélération de l'organe de commande supérieure à un seuil prédéterminé, le dispositif de blocage, en position de blocage, empêche alors le déroulement ou l'enroulement de la sangle hors de ou dans l'enrouleur.

Dans un mode de réalisation particulier, le dispositif de blocage fait partie de l'enrouleur.

Le siège auto selon l'invention peut comprendre un fauteuil présentant un dossier, mobile en rotation et/ou en translation par rapport à une embase. Une sangle comprend alors, par exemple, une extrémité solidaire de l'embase et une autre extrémité solidaire d'une partie supérieure du dossier, reliant ainsi l'embase à la partie supérieure du dossier.

Dans ce cas, et lorsqu'il est prévu, l'enrouleur peut être placé, par exemple, dans l'embase. Le déroulement de la sangle hors de l'enrouleur peut alors permettre de pivoter le fauteuil relativement à l'embase depuis une position de transport face à la route dans une position d'installation face à une portière, voire, éventuellement, dans une position de transport dos à la route.

La sangle peut également appartenir au groupe comprenant :
- les sangles de harnais de siège auto pour enfant destinées à maintenir un enfant dans le siège ;
- les sangles de top tether ou sangles anti-basculement, destinées à solidariser une partie supérieure du siège auto et un point d'ancrage dans le véhicule ;
- les sangles de liaison, configurées pour solidariser une partie du siège auto à une autre partie du siège auto, par exemple le fauteuil à l'embase ;
- ou autres sangles de siège auto.

Il est à noter que le dispositif de blocage de sangle de siège auto, lorsqu'il s'agit de la sangle « top tether » ou de la sangle liant l'embase au haut du siège auto, a pour fonction de retenir le siège auto sur le siège du véhicule.

La sangle du siège auto, lorsque le siège auto peut pivoter pour pouvoir occuper au moins une position d'installation et au moins une position de transport, peut avoir pour fonction de coulisser facilement pour laisser pivoter le siège auto et de ne se bloquer qu'en cas de choc. Le dispositif de blocage est donc configuré de manière que la sangle ne puisse pas se bloquer lors de l'installation de l'enfant.

### 5. Liste des figures

D'autres caractéristiques et avantages de l'invention apparaîtront plus clairement à la lecture de la description suivante de modes de réalisation de l'invention, donnés à titre d'exemples illustratifs et non limitatifs et du dessin annexé dans lequel :
- la figure 1 représente de manière schématique et en perspective un dispositif de blocage conforme à l'invention, dans une position de libre circulation de la sangle,
- la figure 2 est une vue similaire à la figure 1, le dispositif de blocage étant dans une position de blocage de la sangle,
- la figure 3 illustre de manière schématique et en perspective un siège auto pour enfant conforme à un mode de réalisation de l'invention, représenté en position d'installation de l'enfant,
- la figure 4 représente de manière schématique le siège auto de la figure 3 vu de dos et en position de transport.

### 6. Description détaillée de modes de réalisation de l'invention

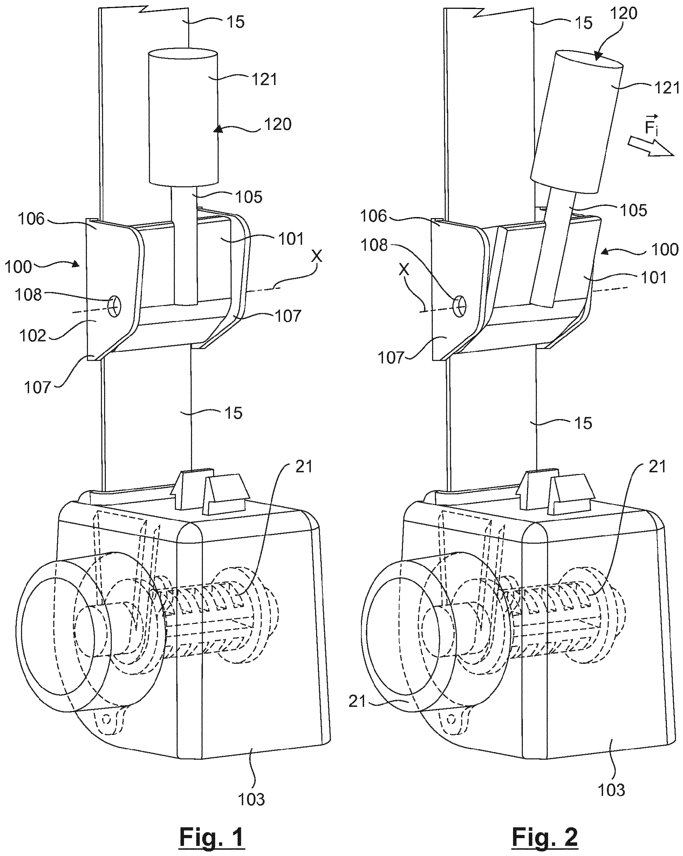

On a représenté sur la figure 1 un dispositif de blocage 100 d'une sangle 15 dans un siège auto 1 pour enfant conforme à l'invention.

Conformément à l'invention, ce dispositif de blocage 100 de la sangle 15 du siège auto 1 pour enfant comprend au moins un premier élément de blocage 101 ou verrou mobile et configuré pour pouvoir occuper une première position, à savoir une position de blocage de la sangle 15, dans laquelle le premier élément de blocage 101 ou verrou pince la sangle 15 contre un second élément de blocage 102 ou chape, afin de l'empêcher de circuler. Cette position de blocage est illustrée sur la figure 2.

Le premier élément de blocage 101 ou verrou peut également occuper une deuxième position, à savoir une position de libre circulation de la sangle 15, comme illustré sur la figure 1, dans laquelle le premier élément de blocage 101 ou verrou est à distance de la sangle 15.

Selon le principe de l'invention, le dispositif de blocage 100 comprend un organe de commande 120 inertiel, contrôlant, comme illustré sur les figures 1 et 2, le passage de la position de libre circulation à la position de blocage, lorsque l'organe de commande 120 est soumis à une force d'inertie Fi produisant une accélération de l'organe de commande supérieure à un seuil prédéterminé.

Ce seuil prédéterminé est choisi de préférence de manière à provoquer un blocage de la sangle 15 en cas de choc, notamment de collision ou de brusque freinage.

Ce seuil peut être, par exemple, d'au moins 0,25*g, soit d'au moins 2,45 m.s⁻², de préférence d'au moins 0,8*g, soit d'au moins 7,85 m.s⁻². Dans l'exemple illustré, le seuil prédéterminé est égal à 0,25*g environ.

Dans l'exemple illustré, la sangle 15 est reliée à un enrouleur 21 logé dans un boîtier 103 et permettant, en position de libre circulation du premier élément de blocage 101 ou verrou, le déroulement de la sangle 15 hors de l'enrouleur 21 ou l'enroulement de la sangle 15 dans l'enrouleur 21.

L'organe de commande 120 comprend une masselotte 121 solidaire du premier élément de blocage 101 ou verrou, par l'intermédiaire d'une tige 105.

Le premier élément de blocage 101 ou verrou est mobile en rotation autour d'un axe s'étendant selon l'axe X visible sur les figures 1 et 2. Cet axe X relie le premier élément de blocage 101 ou verrou au second élément de blocage 102 ou chape dans l'exemple illustré.

Le second élément de blocage 102 ou chape est fixe et solidaire notamment du siège auto, étant fixé à celui-ci. Le second élément de blocage 102 ou chape comporte une plaque de fond 106 le long de laquelle coulisse la sangle 15. La plaque de fond 106 est prolongée de chaque côté et perpendiculairement par deux bords latéraux 107 percés chacun d'une ouverture 108 pour permettre le passage de l'axe.

Le pivotement du premier élément de blocage 101 ou verrou permet le passage d'une position de blocage à une position de libre circulation de la sangle 15 et vice versa. L'organe de commande 120 est, dans cet exemple, placé au-dessus de l'axe X. L'organe de commande 120 entraîne en rotation, sous l'effet de la force d'inertie produisant une accélération de l'organe de commande supérieure audit seuil prédéterminé, le premier élément de blocage 101 ou verrou. Le premier élément de blocage 101 ou verrou passe alors, via la tige 105, de la position de libre circulation de la sangle illustrée sur la figure 1 à la position de blocage illustrée sur la figure 2.

Dans l'exemple illustré, le dispositif de blocage 100 comprend un organe de rappel, non visible sur les figures, du premier élément de blocage 101 ou verrou dans une position permettant une libre circulation de la sangle. Un tel organe de rappel peut par exemple être sous forme d'un ressort, positionné entre le premier élément de blocage 101 ou verrou et le second élément de blocage 102 ou chape, indépendamment de l'axe X. Après un choc, une fois la force d'inertie sensiblement nulle, le premier élément de blocage 101 revient, grâce à l'organe de rappel, automatiquement dans sa position initiale illustrée sur la figure 1.

Ainsi, l'état normal du dispositif de blocage 100 est la position du premier élément de blocage 101 ou verrou en position de libre circulation de la sangle comme illustré sur la figure 1. Ce n'est qu'en cas de choc, tel qu'une collision ou un freinage brusque, que le premier élément de blocage 101 ou verrou passe en position de blocage de la sangle 15 empêchant tout mouvement de celle-ci, tant que la force d'inertie à laquelle est soumis l'organe de commande 120, dans cette exemple la masselotte 121, produit une accélération de l'organe de commande supérieure au seuil prédéterminé.

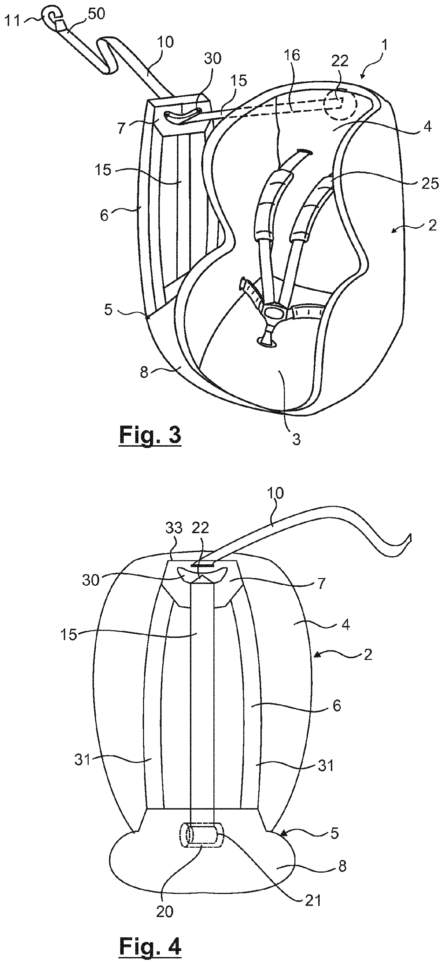

Le dispositif de blocage 100 représenté et conforme à l'invention peut être intégré par exemple dans un siège auto 1 illustré sur la figure 3 qui comprend au moins une sangle 15 de longueur variable.

Ce siège auto 1 pour enfant destiné à équiper un siège de véhicule automobile est conforme à un mode de réalisation de l'invention et comporte un fauteuil 2 comprenant une assise 3 et un dossier 4.

Dans cet exemple, le siège auto 1 comporte également une embase 5 destinée à être posée sur le siège du véhicule. L'embase 5 comporte une extension sensiblement verticale 6 s'étendant le long du dossier 4 du fauteuil 2. L'extension verticale 6 de l'embase 5 présente une partie supérieure 7. L'embase 5 comporte également une partie basse 8.

Le fauteuil 2 comporte, toujours dans cet exemple, un harnais 25, dit à cinq points de fixation, muni dans ce mode de réalisation de fourreaux et d'une boucle de fixation visibles sur la figure 3, de manière connue en soi.

Le siège auto 1 est solidarisé au véhicule par des pinces de fixation ISOFIX® et par une sangle anti-basculement 10 destinée à être accrochée à un point d'ancrage du véhicule (non représenté sur la figure dans un souci de clarté du dessin). L'extrémité 50 de la sangle anti-basculement 10 est destinée à un point d'ancrage du véhicule et est munie dans cet exemple d'un crochet 11 visible sur la figure 3. Dans cet exemple, la sangle anti-basculement 10 est fixée à l'embase 5 notamment, dans cet exemple, à la partie supérieure 7 de l'extension verticale 6 de l'embase 5.

Le fauteuil 2 est mobile en rotation par rapport à l'embase 5 entre au moins une position de transport et au moins une position d'installation d'un enfant dans le siège auto 1. Le siège auto illustré peut même occuper une position de transport face à la route et une position de transport dos à la route.

Bien sûr, l'invention s'applique également au cas des sièges auto pouvant ne prendre qu'une de ces deux positions de transport et/ou ne présentant pas de position d'installation.

Sur la figure 3, le fauteuil 2 est présenté dans la position d'installation de l'enfant, à environ 90° de la position de transport dos ou face à la route, de façon qu'il se trouve face à la portière, de manière à permettre l'installation et le retrait de l'enfant de façon simple et confortable. De préférence, deux positions d'installation sont possibles, en fonction du placement du siège auto dans le véhicule, côté portière gauche ou portière droite.

La sangle 15 comporte une première extrémité 20 solidaire d'un enrouleur 21 monté sur l'embase 5. La sangle 15 comporte une deuxième extrémité 22 fixée au dossier 4, notamment à une partie supérieure 16 du dossier 4.

La sangle 15 de longueur variable relie ainsi la partie supérieure 16 du dossier 4 du fauteuil 2 et l'embase 5, notamment la partie 8 basse de l'embase 5. La sangle 15 traverse, dans cet exemple, la partie supérieure 7 de l'extension verticale 6 de l'embase 5 en traversant une ouverture 30 par exemple en forme d'arc, comme illustré. La sangle 15 relie ainsi, dans cet exemple, une partie mobile du siège auto, formée par le fauteuil 2, à une partie fixe du siège auto, formée par l'embase 5.

Comme visible sur la figure 4, l'enrouleur 21 est placé dans cet exemple dans l'embase 5, notamment dans la partie basse 8 de l'embase. Le déroulement de la sangle 15 hors de l'enrouleur 21 peut alors permettre de pivoter le fauteuil 2 relativement à l'embase 5 depuis une position de transport face à la route dans une position d'installation face à une portière, voire, éventuellement, dans une position de transport dos à la route.

Selon un autre mode de réalisation, l'enrouleur 21 pourrait être installé dans le dossier du fauteuil. Cependant, il semble intéressant, en pratique, que l'enrouleur soit dans l'embase, qui reste fixe et à proximité de moyens permettant le déverrouillage de la liaison en rotation entre le fauteuil et l'embase.

Le dispositif de blocage 100 est monté sur la sangle 15, à proximité de l'enrouleur 21, dans cet exemple, comme visible sur la figure 1 ou 2, notamment. On comprend de l'invention qu'en cas de choc, notamment de collision ou de freinage brusque, l'enclenchement du dispositif de blocage 100 de la sangle 15 empêche tout mouvement de la sangle 15 et donc tout pivotement du fauteuil 2 (partie mobile) relativement à l'embase 5 (partie fixe) ce qui permet de sécuriser le siège auto.

La sangle 15 dont la circulation peut être bloquée par le dispositif de blocage 100 conforme à l'invention peut être une sangle de harnais de siège auto pour enfant destiné à maintenir un enfant dans un siège auto (les moyens de blocage étant par exemple logés dans le dossier), une sangle de *top tether* ou sangle anti-basculement destinée à solidariser la partie supérieure du siège auto et un point d'ancrage dans le véhicule (les moyens de blocage étant par exemple logés dans le dossier) ou, comme c'est le cas dans le mode de réalisation illustré, une autre sangle de liaison configurée pour solidariser une partie du siège auto à une autre partie du siège auto, par exemple le fauteuil à l'embase, ou encore un autre type de sangle.

Le dispositif de blocage 100 peut comporter plusieurs premiers éléments de blocage 101 ou verrous. Par exemple, dans le cas d'un harnais, un même organe de commande peut agir sur deux premiers éléments de blocage, associés chacun à une des bretelles du harnais.

L'organe de commande inertiel décrit ci-dessus peut également être utilisé, dans un siège auto, pour contrôler, seul ou en complément de moyens électroniques qu'il active en cas de besoin, le déclenchement de moyens de protection actifs. Il est à noter que, dans un autre domaine technique, des sièges de véhicule mettant en oeuvre des systèmes bloqueur-enrouleur sur la ceinture associée au siège du véhicule afin de retenir le passager installé dans le siège, en cas de choc. De tels systèmes bloqueur-enrouleur ou « bloqueurs de voiture » ne peuvent cependant pas être transposés aux sièges auto pour enfant destinés à être disposés sur un siège de véhicule.

En effet, la plupart de ces bloqueurs de voiture exploite le déplacement du corps du passager pour bloquer la ceinture et sont, par conséquent, facilement blocables même lorsqu'il n'y a pas d'accident. Il suffit que le passager tire un peu trop brusquement sur la ceinture pour la bloquer.

En revanche, le dispositif de blocage d'un siège auto pour enfant ne doit agir que lors d'un choc. Il ne doit pas se bloquer lors d'un mouvement relativement brusque du siège auto, par exemple lorsqu'il est pivoté, ou lorsque l'enfant se penche un peu.

Par ailleurs, le dispositif de blocage du siège auto a pour fonction, lors d'un choc avant, (quand le véhicule entre dans un mur, dans un autre véhicule ou autre choc), d'empêcher que ce siège auto se désolidarise de l'embase, voire que l'enfant parte en avant, si le dispositif de blocage est sur le harnais. Lors d'un choc arrière, la sangle n'a pas à être retenue puisque le siège auto « s'enfonce » dans le dossier du siège de véhicule auquel cas le dispositif de blocage du siège auto n'est pas nécessairement enclenché.

Dans toute la description, les expressions « comportant un » ou « comprenant un » doivent être comprises comme étant synonymes respectivement des expressions « comportant au moins un » et « comprenant au moins un », sauf si le contraire est spécifié.

## Revendications

1. Dispositif de blocage (100) d'une sangle (15) dans un siège auto (1) pour enfant, comprenant au moins un premier élément de blocage (101), mobile en rotation autour d'un axe (X) qui le relie à un second élément de blocage (102) et configuré pour pouvoir occuper :
∘ une position de blocage de la sangle (15), dans laquelle ledit premier élément de blocage (101) pince la sangle (15) contre ledit second élément de blocage (102) pour l'empêcher de circuler, et
∘ une position de libre circulation de la sangle (15), dans laquelle ledit premier élément de blocage (101) est à distance de la sangle (15),
ledit dispositif comprenant un organe de commande (120) inertiel porté par ledit premier élément de blocage (101) ou reliée directement, par une tige, audit premier élément de blocage (101), ledit organe de commande (120) contrôlant le passage de ladite position de libre circulation à ladite position de blocage, lorsque ledit organe de commande (120) est soumis à une force d'inertie (Fi) produisant une accélération de l'organe de commande (120) supérieure à un seuil prédéterminé,
ledit organe de commande (120) comprenant une masselotte,
**caractérisé en ce que** ladite masselotte est solidaire dudit au moins un premier élément de blocage (101) et est placée au-dessus dudit axe (X) et **en ce que** la masselotte et ledit au moins un premier élément de blocage (101) sont solidaires en rotation autour de l'axe (X).

2. Siège auto (1) pour enfant, destiné à équiper un siège de véhicule, comprenant au moins une sangle (15) de longueur variable, **caractérisé en ce qu'**il comprend au moins un dispositif de blocage (100) selon la revendication 1, agissant sur ladite sangle (15).

3. Siège auto (1) pour enfant selon la revendication 2, comprenant un fauteuil (2), présentant un dossier (4), mobile en rotation et/ou en translation par rapport à une embase (5),
**caractérisé en ce que** ladite sangle (15) comprend, outre l'extrémité (20) solidaire de l'embase (5), une autre extrémité (22) solidaire d'une partie supérieure (16) du dossier (4), reliant ainsi l'embase (5) à la partie supérieure (16) du dossier (4).

4. Siège auto (1) pour enfant selon l'une quelconque des revendications 2 et 3, **caractérisé en ce que** ladite sangle (15) appartient au groupe comprenant :
- les sangles de harnais de siège auto pour enfant destinées à maintenir un enfant dans le siège ;
- les sangles de top tether ou sangles anti-basculement, destinées à solidariser une partie supérieure du siège auto et un point d'ancrage dans le véhicule ;
- les sangles de liaison, configurées pour solidariser une partie du siège auto à une autre partie du siège auto, par exemple le fauteuil à l'embase.

## Patentansprüche

1. Verriegelungsvorrichtung (100) eines Gurtes (15) in einem Autositz (1) für Kinder, umfassend wenigstens ein erstes Verriegelungselement (101), das um eine Achse (X) drehbewegbar ist, die es mit einem zweiten Verriegelungselement (102) verbindet, und das dazu eingerichtet ist, einnehmen zu können:
- eine Position der Verriegelung des Gurtes (15), in welcher das erste Verriegelungselement (101) den Gurt (15) gegen das zweite Verriegelungselement (102) klemmt, um dessen Zirkulation zu verhindern, und
- eine Position der freien Zirkulation des Gurtes (15), in welcher das erste Verriegelungselement (101) von dem Gurt (15) beabstandet ist,
wobei die Vorrichtung ein TrägheitsSteuerorgan (120) aufweist, das durch das erste Verriegelungselement (101) getragen ist oder mittels einer Stange direkt an dem ersten Verriegelungselement (101) verbunden ist, wobei das Steuerorgan (120) den Übergang von der Position der freien Zirkulation zu der Position der Verriegelung steuert, wenn das Steuerorgan (120) eine Trägheitskraft (Fi) ausgesetzt ist, das eine Beschleunigung des Steuerorgans (120) verursacht, die größer als ein vorbestimmter Schwellwert ist,
wobei das Steuerorgan (120) ein Ausgleichsgewicht aufweist,
**dadurch gekennzeichnet, dass** das Ausgleichsgewicht mit wenigstens einem ersten Verriegelungselement (101) verbunden ist und oberhalb der Achse (X) angeordnet ist, und dadurch, dass das Ausgleichsgewicht und das wenigstens eine erste Verriegelungselement (101) drehbar um die Achse (X) verbunden sind.

2. Autositz (1) für Kinder, vorgesehen einen Fahrzeugsitz auszurüsten, umfassend wenigstens einen Gurt (15) variabler Länge, **dadurch gekennzeichnet, dass** er wenigstens eine Verriegelungsvorrichtung (100) nach Anspruch 1 aufweist, die auf den Gurt (15) wirkt.

3. Autositz (1) für Kinder nach Anspruch 2, der einen Sessel (2) mit einer Rückenlehne (4) aufweist, die drehbewegbar und/oder translatorisch bewegbar bezüglich einer Basis (5) ist,
**dadurch gekennzeichnet, dass** der Gurt neben dem Ende (20), das mit der Basis (5) verbunden ist, ein anderes Ende (22) aufweist, das mit einem oberen Teil (16) der Rückenlehne (4) verbunden ist, wodurch die Basis (5) an dem oberen Teil (16) der Rückenlehne (4) befestigt ist.

4. Autositz (1) für Kinder nach einem der Ansprüche 2 und 3, **dadurch gekennzeichnet, dass** der Gurt (15) zu der Gruppe gehört, die aufweist:
- Harnisch-Gurte von Autositzen für Kinder, die vorgesehen sind, ein Kind in dem Sitz zu halten;
- obere Haltegurte oder Antikippgurte, die vorgesehen sind, einen oberen Teil des Autositzes und einen Verankerungspunkt in dem Fahrzeug zu verbinden;
- Verbindungsgurte, die vorgesehen sind, einen Teil des Autositzes mit einem anderen Teil des Autositzes, beispielsweise den Sessel an der Basis, zu verbinden.

## Claims

1. Device for locking (100) a strap (15) in a child car seat (1), comprising at least one first locking element (101), that is mobile in rotation about a shaft (X) that connects it to a second locking element (102) and is designed to be able to take up:
- a locking position of the strap (15), wherein said first locking element (101) pinches the strap (15) against said second locking element (102) in order to prevent it from moving, and
- a free-movement position of the strap (15), wherein said first locking element (101) is away from the strap (15),
said device comprising an inertial control member (120) carried by said first locking element (101), or connected directly, by a rod, to said first locking element (101), said control member (120) controlling the transition from said free-movement position to said locking position, when said control member (120) is subjected to a force of inertia (Fi) that produces an acceleration of the control member (120) that is greater than a predetermined threshold,
said control member (120) comprising an inertia block,
**characterised in that** said inertia block is integral with said at least one first locking element (101) and is placed above said shaft (X) and **in that** the inertia block and said at least one first locking element (101) are integral in rotation around the shaft (X).

2. Child car seat (1), intended to be provided on a vehicle seat, comprising at least one strap (15) of variable length, **characterised in that** it comprises at least one device for locking (100) according to claim 1, acting on said strap (15).

3. Child car seat (1) according to claim 2, comprising an armchair (2), having a seatback (4), mobile in rotation and/or in translation with respect to a base (5),
**characterised in that** said strap (15) comprises, in addition to the end (20) integral with the base (5), another end (22) integral with an upper portion (16) of the seatback (4), as such connecting the base (5) to the upper portion (16) of the seatback (4).

4. Child car seat (1) according to any of claims 2 and 3, **characterised in that** said strap (15) belongs to the group comprising:
- child car seat harness straps intended to maintain a child in the seat;
- top tether straps or anti-tipping straps, intended to fasten an upper portion of the car seat and an anchoring point in the vehicle;
- the connection straps, configured to fasten a portion of the car seat to another portion of the car seat, for example the armchair to the base.
